(19) **Europäisches Patentamt / European Patent Office / Office européen des brevets**

(11) **EP 1 727 374 B1**

(12) **EUROPEAN PATENT SPECIFICATION**

(45) Date of publication and mention
of the grant of the patent:
**24.10.2018 Bulletin 2018/43**

(51) Int Cl.:
*H04N 19/126* *(2014.01)*    *H04N 19/147* *(2014.01)*
*H04N 19/176* *(2014.01)*    *H04N 19/196* *(2014.01)*
*H04N 19/61* *(2014.01)*

(21) Application number: **06113415.1**

(22) Date of filing: **03.05.2006**

(54) **Method for controlling the encoder output bit rate in a block-based video encoder, and corresponding video encoder apparatus**

Verfahren zum Regeln der Ausgangsbitrate in einem Block-basierten Videokodierer, und entsprechendes Videogerät

Méthode pour réguler le débit de sortie dans un codeur vidéo par blocs, et dispositif vidéo correspondant

(84) Designated Contracting States:
**DE FR GB**

(30) Priority: **27.05.2005 EP 05300424**

(43) Date of publication of application:
**29.11.2006 Bulletin 2006/48**

(73) Proprietor: **InterDigital Madison Patent Holdings**
**75017 Paris (FR)**

(72) Inventors:
• **Zhu, Li Hua,**
  **RM 03-09, 8f, Blg. A, Techn. Fortune**
  **100085 Beijing (CN)**
• **Guillotel, Philippe**
  **35770 Vern sur Seiche (FR)**
• **Wang, Charles,**
  **Rm 03-09, 8F, Blg. A, Techn Fortune**
  **100085 Beijing (CN)**

(74) Representative: **Vidon Brevets & Stratégie**
  **16B, rue de Jouanet**
  **BP 90333**
  **35703 Rennes Cedex 7 (FR)**

(56) References cited:
• **ZHIHAI HE: "rho-Domain Rate-Distortion Analysis and Rate Control for Visual Coding and Communication" PHD DISSERTATION, UNIVERSITY OF CALIFORNIA, SANTA BARBARA, June 2001 (2001-06), pages II-138, XP002348975 Santa Barbara, CA**

• **SHIN I-H ET AL: "Rate control using linear rate-rho model for H.264" SIGNAL PROCESSING. IMAGE COMMUNICATION, ELSEVIER SCIENCE PUBLISHERS, AMSTERDAM, NL, vol. 19, no. 4, April 2004 (2004-04), pages 341-352, XP004495309 ISSN: 0923-5965**

• **ZHENGGUO LI ET AL: "adaptive rate control with HRD consideration" JOINT VIDEO TEAM (JVT) OF ISO/IEC MPEG & ITU-T VCEG (ISO/IEC JTC1/SC29/WG11 AND ITU-T SG16 Q6), XX, XX, 26 May 2003 (2003-05-26), pages 1-18, XP002328786**

• **LI Z G ET AL: "Adaptive rate control for H.264" 2004 INTERNATIONAL CONFERENCE ON IMAGE PROCESSING (ICIP) 24-27 OCT. 2004 SINGAPORE (IEEE CAT. NO.04CH37580) IEEE PISCATAWAY, NJ, USA, vol. 2, 24 October 2004 (2004-10-24), pages 745-748 Vol.2, XP002348976 ISBN: 0-7803-8554-3**

• **HE Z ET AL: "A UNIFIED RATE-DISTORTION ANALYSIS FRAMEWORK FOR TRANSFORM CODING" IEEE TRANSACTIONS ON CIRCUITS AND SYSTEMS FOR VIDEO TECHNOLOGY, IEEE INC. NEW YORK, US, vol. 11, no. 12, December 2001 (2001-12), pages 1221-1236, XP001092444 ISSN: 1051-8215**

• **HE Z ET AL: "LOW-DELAY RATE CONTROL FOR DCT VIDEO CODING VIA RHO-DOMAIN SOURCE MODELING" IEEE TRANSACTIONS ON CIRCUITS AND SYSTEMS FOR VIDEO TECHNOLOGY, IEEE INC. NEW YORK, US, vol. 11, no. 8, August 2001 (2001-08), pages 928-940, XP001086765 ISSN: 1051-8215**

- JOONG-YUN LEE ET AL: "A rate control algorithm for DCT-based video coding using simple rate estimation and linear source model" IEEE TRANSACTIONS ON CIRCUITS AND SYSTEMS FOR VIDEO TECHNOLOGY IEEE USA, vol. 15, no. 9, September 2005 (2005-09), pages 1077-1085, XP002346037 ISSN: 1051-8215
- JIANFENG XU ET AL: "A novel rate control for H.264", PROCEEDINGS / 2004 IEEE INTERNATIONAL SYMPOSIUM ON CIRCUITS AND SYSTEMS : MAY 23 - 26, 2004, SHERATON VANCOUVER WALL CENTRE HOTEL, VANCOUVER, BRITISH COLUMBIA, CANADA, IEEE OPERATIONS CENTER, PISCATAWAY, NJ, 23 May 2004 (2004-05-23), pages III-809, XP010719387, ISBN: 978-0-7803-8251-0

**Description**

The invention relates to a method and to an apparatus for controlling the encoder output bit rate in a block-based video encoder, e.g. an MPEG4-AVC encoder.

Background

Constant-bitrate (CBR) rate control is very useful for real-time video transmission. However, it is difficult to realise a good CBR rate control in an MPEG4-AVC (ISO/IEC 14496-10) video codec. Generally, in an MPEG4-AVC codec both, bitrate and distortion depend on a quantisation parameter QP that controls the degree of quantisation. By adjusting QP one can get a trade-off between rate-QP and distortion-QP. However, most rate control algorithms either do not achieve a good visual quality or suffer from rather large controlling errors. In the Joint Video Team (JVT) reference source codes, use of the rate control algorithms proposed by Z.Li, W.Gao, F.Pan, S.Ma, K.P.Lin, G.Feng, X.Lin, S.Rahard-ja, H.Lu and Y.Lu, "Adaptive Rate Control with HRD Consideration", document JVT-H014, 8th meeting, Geneva, May 2003, denoted [1],
and by Z.G.Li, F.Pan, K.P.Lim, X.Lin and S.Rahardja, "Adaptive Rate Control for H.264", ICIP, 2004, denoted [2], has been recommended by the JVT committee.

Zhihai He has proposed in "ρ-Domain Rate-Distortion Analysis and Rate Control for Visual Coding and Communication", PhD Dissertation, University of California, Santa Barbara, June 2001, denoted [3], a new model that achieves a good performance for H.263 and MPEG4-2 (ISO/IEC 14496-2) codecs. The parameter 'ρ' represents the percentage of zeros among the quantised transform coefficients. He found a basically linear relationship between the value 'ρ' and the real bit rate because the percentage of zeros plays an important role in determining the final bit rate. He assumed that the distribution of residual coefficients complies with either Gaussian distribution or Laplace distribution, so that the linear relationship or model can be derived as follows:
The Laplace distribution for the residual image is

$$R(\rho) = 2 * log_2 e(1-\rho) + O([1-\rho]^3) \qquad (1)$$

wherein 'O' is the higher-order infinite small.
The Gaussian distribution for the original image is

$$R(\rho) = log_2 \frac{1+x^a}{1+x^a - 2x + (1-a)(1+x^a)x \ln x}$$

$$where \quad a = \frac{0.5}{0.5+b}, x = 1-\rho \qquad (2)$$

and where 'a' and 'b' are statistical parameters of the original image.
The relation between bitrate R and percentage ρ of quantised transform zero values can be approximated by:

$$R(\rho) = \Theta * (100-\rho) \qquad (3)$$

wherein ρ is expressed in a % value and Θ is a constant representing the slope of the linear relationship.
The final goal is to find the relation between the percentage ρ of zero coefficients $P$ and the quantisation parameter $QP$. According to Z.He, there is a one-to-one mapping between $QP$ and ρ. Therefore the rate/distortion functions $R(QP)$ and $D(QP)$ in the $QP$-domain can be mapped in the ρ-domain denoted as $R(\rho)$ and $D(\rho)$, respectively.
For the H.263 video compression the relation between the percentage ρ of zero coefficients $P$ and the quantisation parameter $QP$ it is given by:

$$P(QP) = P(QP)_{intra} - P(QP)_{inter}$$

$$= \sum_{x \in IntraMB} (if(|x| \prec 2QP)) + \sum_{x \in InerMB} (if(|x| \prec 2.5QP)) \qquad (4)$$

This linear ρ-domain model has a good performance with respect to controlling errors and visual quality in MPEG4-2.

SHIN I-H ET AL: "Rate control using linear rate-rho model for H.264", SIGNAL PROCESSING. IMAGE COMMUNICATION, ELSEVIER SCIENCE PUBLISHERS, AMSTERDAM, NL, vol. 19, no. 4, April 2004 (2004-04), pages 341-352, XP004495309, ISSN: 0923-5965 discloses frame level rate control using linear rate-ρ model for H.264. This document also proposes QP replacement constraints to reduce the computation time and includes determining the percentage ρ of the quantised coefficients that get the value "zero" depending on the quantisation parameter for intra and inter macroblocks using look-up tables.

Invention

A good rate control provides good coding/decoding properties such as small controlling errors and a good visual quality, which both are important for practical MPEG4-AVC applications. However, the quantisation processing and the percentage ρ of zeros among the quantised transform or DCT transform (discrete cosine transform) coefficients in MPEG4-AVC is different from that used in MPEG4-2. The original Z.He ρ-domain model cannot be used for an MPEG4-AVC codec because of the conflict between rate/distortion optimisation (RDO) and rate control, which both are dependent from the quantisation step size.

The above-mentioned rate control algorithms [1] and [2] cause controlling errors in picture sequences including e.g. flashes or in/out fades. The visual quality is unstable because of usage of too much different QPs for different (temporally or spatially adjacent) macroblocks. Moreover, the rate control in [2] employs the information from previous units or scenes so that it is not a suitable solution for coding abrupt changes of scene content in a video sequence. A problem to be solved by the invention is to provide an improved bit rate and/or distortion control for MPEG4-AVC applications. This problem is solved by the method disclosed in claim 1. An apparatus that utilises this method is disclosed in claim 2.

According to the invention, an adapted ρ-domain processing for real-time rate control is applied, which can be directly used in practical applications. A couple of mapping tables have been designed to realise the mapping between the quantisation parameters QP and the percentage of transform zero coefficients, the application of which tables does not only improve the mapping accuracy, but also shortens the computation time. The quantisation parameter QP is an index or a parameter that codes or represents the quantiser step size. QP may have one of 52 levels between 0 and 51, as is true for MPEG4-AVC. For example, QP = 0, 3, 6, 10, 18, 30, 48 and 51 correspond to quantisation step sizes of 0.625, 0.875, 1.25, 2, 5, 20, 160 and 224, respectively.

Further, a detailed analysis of the transform level is carried out to get the slope of the (linear) relationship between the bitrate and the percentage values of the zeros. Finally, the slope of the linear model is constrained by a look-ahead procedure with respect to the neighbour frames or blocks.

Advantageously, the inventive rate control for a one-pass MPEG-4 AVC codec achieves small controlling errors and good visual quality:

- it controls accurately the bit rates - only 1% control error per second;
- it shortens the computation time for the pre-analysis;
- it solves the buffer overflow and underflow problem in MPEG4-AVC.

In principle, the inventive method is suited for controlling the encoder output bit rate in a block-based video encoder, wherein the transform coefficients derived from a pixel block are quantised using a variable quantisation parameter and are encoded, and wherein said quantisation parameter is related to the quantiser step size and said pixel blocks can be coded in intra mode or in inter mode, said method including the steps:

- determining for each macroblock of a frame containing one or more of said blocks of transform coefficients, which percentage ρ of the quantised coefficients gets the amplitude 'zero' depending on an applied value of said quantisation parameter;
- based on the resulting information about the ρ value/ quantisation parameter relationship for the macroblocks of said frame, controlling the encoder output bit rate R for said frame, when processing said macroblocks, by using said quantisation parameter value such that the control of the bit rate $R$ is based on $R(\rho) = \Theta*(100-\rho)$, $\Theta$ being a constant, characterised by:
  when controlling the encoder output bit rate $R$ by using said quantisation parameter value, the quantisation parameter value applied to the current macroblock is constrained by a pre-determined deviation from the average of the quantisation parameter values for all prior macroblocks in the current frame until the current macroblock,
  wherein said percentage ρ determination (RHOITATBL, RHOIETBL) for each macroblock of transform coefficients of a frame is carried out using two different types of look-up tables, a first type mapping the coding mode (Intra, Inter), the position (i, j) of a transform coefficient in a block and the magnitude value of transform coefficients to a corresponding candidate quantisation parameter value, a second type mapping the coding mode (Intra, Inter), the position (i, j) of a transform coefficient in a block and a candidate quantisation parameter (QP) to an applicable quantisation threshold value for a quantisation parameter.

In principle the inventive block-based video encoder apparatus is suited for controlling the encoder output bit rate, wherein transform coefficients derived from a pixel block are quantised using a variable quantisation parameter and are encoded, and wherein said quantisation parameter is related to the quantiser step size and said pixel blocks can be coded in intra mode or in inter mode, said apparatus including:

- means being adapted for determining for each macroblock of a frame containing one or more of said blocks of transform coefficients, which percentage $\rho$ of the quantised coefficients gets the amplitude 'zero' depending on an applied value of said quantisation parameter;
- controlling means being adapted for controlling, based on the resulting information about the $\rho$ value/quanti-sation parameter relationship for the macroblocks of said frame, the encoder output bit rate $R$ for said frame, when processing said macroblocks, by using said quantisation parameter value such that the control of the bit rate $R$ is based on $R(\rho) = \Theta*(100-\rho)$, $\Theta$ being a constant, characterised in that:

said controlling means constrain the quantisation parameter value applied to the current macroblock by a pre-determined deviation from the average of the quantisation parameter values for all prior macroblocks in the current frame until the current macroblock,
wherein said percentage $\rho$ determination (RHOITATBL, RHOIETBL) for each macroblock of transform coefficients of a frame is carried out using two different types of look-up tables, a first type mapping the coding mode (Intra, Inter), the position (i, j) of a transform coefficient in a block and the magnitude value of transform coefficients to a corresponding candidate quantisation parameter value, a second type mapping the coding mode (Intra, Inter), the position (i, j) of a transform coefficient in a block and a candidate quantisation parameter (QP) to an applicable quantisation threshold value for a quantisation parameter.

Advantageous additional embodiments of the invention are disclosed in the respective dependent claims.

Drawings

Exemplary embodiments of the invention are described with reference to the accompanying drawings, which show in:

Fig. 1 flowchart for the inventive pre-analysis and $\rho_I$ and $\rho_P$ determination;
Fig. 2 relation between QP, $\rho$ and a transform value;
Fig. 3 flowchart for the $\rho$ rate control;
Fig. 4 simplified block diagram of the inventive quantisation controller.

Exemplary embodiments

$\rho$-domain

According to [3], the $\rho$-domain control requires the knowledge of the percentage of zeros following quantisation in the transform or DCT transform domain for each macroblock in a frame (if the residuum after transform complies with Gaussian or Laplace distribution, the $\rho$-domain can work correctly). However, the rate-distortion optimisation (RDO) requires QP to consider motion estimation and mode decision, and for different modes there are different transform coefficients. According to the invention, a simple and accurate residue estimation is used. In addition, side information from the pre-analysis - such as motion vectors and transform coefficients - can be used again, and advantageously shortens the computation time in the RDO step.

Pre-processing

a) 16*16 macroblock pre-analysis

In practical MPEG-4 AVC encoding, following mode decision the majority (generally 60% to 90%) of (macro-)blocks has a size of 16*16 pixels before transform, whereas the transform size is 4*4. To achieve visual smoothness, the QP difference between two neighbouring macroblocks can not be too large. Therefore a frame to be encoded is pre-processed first, and is then processed according to the statistics of the current frame and its neighbour frames in order to carry out the ρ-domain rate control. The percentage of quantised zero coefficients controls the final performance of the ρ-domain mode.

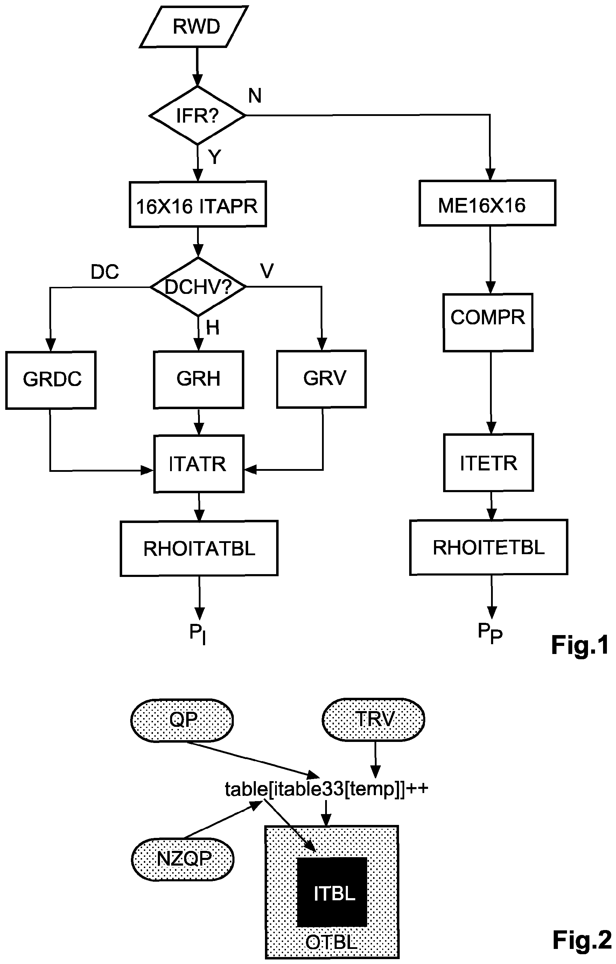

For an I frame a 16*16-intra prediction only is carried out, using three modes: DC prediction, horizontal prediction and vertical prediction. For a current time instant, the reconstructed intra macroblock is unavailable. Therefore it is important to find a good estimation for the intra macroblock to be reconstructed, i.e. for computing I frame predictions. After many experiments it was found that the picture content of the original frame can be used as the reconstruction, but a modified parameter must be added for bitrate computation according to the QP of the previous macroblock. Following this intra prediction, the residual image is computed according to the best prediction direction. A transform or a DCT transform is applied to the residue of each macroblock, whereby the output transform coefficients are produced, as shown in Fig. 1.

For a P frame a 16*16-motion estimation is carried out for each macroblock and then, after applying the motion vectors found, the residue image is transformed according to Fig. 1. According to Fig. 1, raw data RWD is input to the processing and it is checked in step IFR whether or not an I frame processing is to be performed.

If true, a 16*16 pixel block intra prediction 16*16ITAPR is carried out on macroblocks for this frame, including a check DCHV whether DC prediction, horizontal prediction or vertical prediction is to be performed. A corresponding calculation is carried out in a DC residual getting stage GRDC, a horizontal prediction residual getting stage GRH or a vertical prediction residual getting stage GRV.

As an alternative, check DCHV is omitted and the three predictions are in each case performed in parallel in GRDC, GRH and GRV, followed by a check which one of the three results is to be processed further.

The corresponding result block is transformed into the frequency domain by an intra transform stage ITATR. Thereafter in stage RHOITATBL a mapping (see below) takes place between the transform coefficients and the quantisation parameter QP in order to get the $\rho_I$-value (i.e. the number or percentage of zero transform coefficients) for the current block, using the below intra tables 1 to 3 and 7 to 9.

If not true, a 16*16 pixel block motion estimation ME16*16 is carried out on the macroblocks for this frame, followed by computing the residual block in a stage COMPR.

The corresponding result block is transformed in an inter transform stage ITEDCT. Thereafter in stage RHOITETBL a mapping (see below) takes place between the transform coefficients and the quantisation parameter QP in order to get the $\rho_P$-value (i.e. the number or percentage of zero transform coefficients) for the current block, using the below inter tables 4 to 6 and 10 to 12.

The output values $\rho_I$ and $\rho_P$ from stages RHOITATBL and RHOITETBL are used for a subsequent rate/distortion optimisation RDO.

*b) Look-up tables mapping*

In stages RHOITATBL and RHOITETBL the intra rho values $\rho_I$ and the inter rho values $\rho_P$ are calculated as a fraction from '1' (or as a percentage value) and as a function of QP, according to below equations (5), wherein *M* is the number of pixels/coefficients in the current macroblock (i.e. generally the number of luminance pixel values per macroblock is 16*(4*4) = 256 and the number of chrominance pixel values per macroblock (for 4:2:0 format) is two times 4*(4*4) = 128, resulting in 384 pixel values per macroblock), *x* is the transformed coefficient at 4*4 transform block position *i* (0...3) and *j* (0...3), *itable* is the intra threshold to decide if the current Intra coefficient is zero, and *table* is the Inter threshold to decide if the current inter coefficient is zero:

$$\rho_I(QP) = P(QP)_{intra}$$
$$= \frac{1}{M} \sum_{x \in IntraMB} (if(|x| < itable(i, j, QP)))$$
$$\rho_P(QP) = P(QP)_{inter}$$
$$= \frac{1}{M} \sum_{x \in InerMB} (if(|x| < table(i, j, QP)))$$

$$(5)$$

The goal is to get for each set of transformed macroblock values in the video sequence the function or relationship between a candidate QP and the resulting number of zero amplitude transform coefficients following quantisation.

The current macroblock status 'Intra' or 'Inter', the current block position (0...3) (0...3) and the candidate QP (0...51) are used to address a corresponding one of tables 1 to 6 in order to get the applicable quantisation threshold value for that current QP. Each table includes 52 values, i.e. the quantity of QPs useable in the encoder.

Table 1, intra quantisation threshold table for block positions (0,0), (0,2), (2,0), (2,2) :
{2,2,3,3,3,3,4,4,5,5,6,6,7,8,9,10,11,12,14,15,18,19,22,24,
27,30,35,38,43,48,54,59,70,75,86,96,107,118,139,150,171,192, 214,235,278,299,342,384,427,470,555,598}

Table 2, intra quantisation threshold table for block positions (0,1), (0,3), (1,0), (1,2), (2,1), (2,3), (3,0), (3,2) :
{3,3,4,4,5,5,6,6,7,8,9,10,11,12,14,16,17,20,22,24,27,31,34,
39,44,47,54,61,67,77,87,94,107,121,134,154,174,187,214,241,
267,307,347,374,427,481,534,614,694,747,854,961}

Table 3, intra quantisation threshold table for block positions (1,1),(1,3),(3,1),(3,3) :
{5,5,6,6,7,8,9,10,11,12,14,16,17,19,21,24,27,31,34,38,42,48,
53,61,67,76,84,96,105,121,134,151,167,192,209,242,267,301,
334,384,417,484,534,601,667,767,834,967,1067,1201,1334,1534}

Table 4, inter quantisation threshold table for block positions (0,0),(0,2),(2,0),(2,2) :
{3,3,3,3,4,4,5,5,6,7,8,9,10,11,12,14,15,17,19,22,24,27,30,
34,37,44,47,54,60,67,74,87,94,107,120,134,147,174,187,214, 240,267,294,347,374,427,480,534,587,694,747}

Table 5, inter quantisation threshold table for block positions (0,1),(0,3),(1,0),(1,2),(2,1),(2,3),(3,0),(3,2) :
{4,4,5,5,6,6,7,8,9,10,11,12,14,15,17,19,21,24,28,30,34,38,
42,48,55,59,67,76,84,96,109,117,134,151,167,192,217,234,267,
301,334,384,434,467,534,601,667,767,867,934,1067,1201}

Table 6, inter quantisation threshold table for block positions (1,1),(1,3),(3,1),(3,3) :
{6,6,7,8,9,10,11,12,14,15,17,19,21,24,27,30,33,38,42,47,53,
60,66,76,84,94,105,120,131,152,167,188,209,240,261,303,334,
376,417,480,521,605,667,751,834,959,1042,1209,1334,1501, 1667,1917}

These six tables are constructed as follows.
To block positions (0,0), (0,2), (2,0) and (2,2) a position factor $a^2$ is assigned, to block positions (0,1), (0,3), (1,0), (1,2), (2,1), (2,3), (3,0) and (3,2) a position factor $b^2/4$ is assigned, and to block positions (1,1), (1,3), (3,1) and (3,3) a position factor $a*b/2$ is assigned,

whereby a = 1/2, $b = \sqrt{(2/5)}$, and PF is the resulting position factor.
Suppose that a candidate zero value is:

$$Z_{ij} = \text{round}(W_{ij}*PF/Q_{step}) ,$$

wherein $W_{ij}$ is a transform coefficient value before quantisation and $Q_{step}$ is a quantisation step size value.
In practise, $|Z_{ij}| = |W_{ij}|*MF + f >> qbits$, wherein $MF = PF/Q_{step}*2^{qbits}$, qbits = 15 + floor(QP/6), $f = 2^{qbits}/3$ for intra blocks, $f = 2^{qbits}/6$ for inter blocks.
For inter blocks, if $W_{ij} < Q_{step}*5/6/PF$, the transform coefficient must be quantised to zero.
For intra blocks, if $W_{ij} < Q_{step}*2/3/PF$, the transform coefficient must be quantised to zero.

Deriving a threshold value that will be quantised to zero: For example, for a transform coefficient at intra block position (0,0), if QP=51 (and thus the corresponding $Q_{step}$=224), the threshold value below which the transform coefficient value will be quantised to zero is 598 because 597.33 = 224*2/3/PF(0,0), PF(0,0)= $a^2$ = 1/4. Correspondingly, the intra and inter quantisation threshold tables 1 to 6 are derived for QP=0 to QP=51 and for each group of block positions.
For intra blocks, the greatest quantisation threshold is 1534. If an intra transform coefficient is greater than 1534 it will be never quantised to zero. For inter blocks, the greatest quantisation threshold is 1917. If an inter transform coefficient is greater than 1917 it will be never quantised to zero.
The following tables 7 to 12 can be used to count the number of zero transform coefficients that will be obtained after quantisation, depending from the QP that will be selected. The numbers in these tables represent QP values.

Table 7, intra quantisation look-up table for block positions (0,0),(0,2),(2,0),(2,2) :
{0,1,2,2,6,8,10,12,13,14,15,16,17,18,18,19,20,20,20,21,22,
22,22,23,23,24,24,24,25,25,25,26,26,26,26,26,27,27,27,28,28,
28,28,28,29,29,29,29,29,30,30,30,30,30,30,31,31,31,31,31,32,
32,32,32,32,32,32,32,32,32,33,33,33,33,33,34,34,34,34,34,
34,34,34,34,34,35,35,35,35,35,35,35,35,35,35,36,36,36,36,
36,36,36,36,36,36,37,37,37,37,37,37,37,37,37,37,38,38,
38,38,38,38,38,38,38,38,38,38,38,38,38,38,38,38,39,
39,39,39,39,39,39,39,39,39,40,40,40,40,40,40,40,40,40,
40,40,40,40,40,40,40,40,40,40,41,41,41,41,41,41,41,41,
41,41,41,41,41,41,41,41,41,41,41,42,42,42,42,42,42,42,42,
42,42,42,42,42,42,42,42,42,42,42,42,42,43,43,43,43,43,43,
43,43,43,43,43,43,43,43,43,43,43,43,43,43,44,44,44,44,44,
44,44,44,44,44,44,44,44,44,44,44,44,44,44,44,44,44,44,
44,44,44,44,44,44,44,44,44,44,44,44,44,44,44,44,44,45,45,
45,45,45,45,45,45,45,45,45,45,45,45,45,45,45,45,45,46,
46,46,46,46,46,46,46,46,46,46,46,46,46,46,46,46,46,46,46,
46,46,46,46,46,46,46,46,46,46,46,46,46,46,46,46,46,46,
46,46,47,47,47,47,47,47,47,47,47,47,47,47,47,47,47,47,47,
47,47,47,47,47,47,47,47,47,47,47,47,47,47,47,47,47,47,
47,47,47,47,48,48,48,48,48,48,48,48,48,48,48,48,48,48,48,
48,48,48,48,48,48,48,48,48,48,48,48,48,48,48,48,48,48,
48,48,48,48,48,48,48,49,49,49,49,49,49,49,49,49,49,49,
49,49,49,49,49,49,49,49,49,49,49,49,49,49,49,49,49,49,
49,49,49,49,49,49,49,49,49,50,50,50,50,50,50,50,50,50,
50,50,50,50,50,50,50,50,50,50,50,50,50,50,50,50,50,50,
50,50,50,50,50,50,50,50,50,50,50,50,50,50,50,50,50,50,
50,50,50,50,50,50,50,50,50,50,50,50,50,50,50,50,50,50,
50,50,50,50,50,50,50,50,50,50,50,50,50,51,51,51,51,51,
51,51,51,51,51,51,51,51,51,51,51,51,51,51,51,51,51,51,51,
51,51,51,51,51,51,51,51,51,51,51,51,51,51,51,51}
This table contains 598 entries.

Table 8, intra quantisation look-up table for block positions (0,1),(0,3),(1,0),(1,2),(2,1),(2,3),(3,0),(3,2) :
{0,1,2,2,4,6,8,9,10,11,12,13,14,14,15,15,16,17,17,17,18,
18,19,19,20,20,20,21,21,21,21,22,22,22,23,23,23,23,23,24,24,
24,24,24,25,25,25,26,26,26,26,26,26,26,27,27,27,27,27,27,27,
28,28,28,28,28,28,29,29,29,29,29,29,29,29,29,29,30,30,30,30,
30,30,30,30,30,30,31,31,31,31,31,31,31,32,32,32,32,32,32,
32,32,32,32,32,32,33,33,33,33,33,33,33,33,33,33,33,33,33,33,
34,34,34,34,34,34,34,34,34,34,34,34,34,35,35,35,35,35,35,35,
35,35,35,35,35,35,35,35,35,35,35,35,36,36,36,36,36,36,36,
36,36,36,36,36,36,36,36,36,36,36,36,36,37,37,37,37,37,37,37,
37,37,37,37,37,37,38,38,38,38,38,38,38,38,38,38,38,38,38,
38,38,38,38,38,38,38,38,38,38,38,38,38,39,39,39,39,39,39,39,
39,39,39,39,39,39,39,39,39,39,39,39,39,39,39,39,39,39,39,
40,40,40,40,40,40,40,40,40,40,40,40,40,40,40,40,40,40,40,
40,40,40,40,40,40,41,41,41,41,41,41,41,41,41,41,41,41,41,41,
41,41,41,41,41,41,41,41,41,41,41,41,41,41,41,41,41,41,41,41,
41,41,41,41,41,41,42,42,42,42,42,42,42,42,42,42,42,42,42,42,
42,42,42,42,42,42,42,42,42,42,42,42,42,42,42,42,42,42,42,
42,42,42,42,42,42,43,43,43,43,43,43,43,43,43,43,43,43,43,43,
43,43,43,43,43,43,43,43,43,43,43,44,44,44,44,44,44,44,
44,44,44,44,44,44,44,44,44,44,44,44,44,44,44,44,44,44,
44,44,44,44,44,44,44,44,44,44,44,44,44,44,44,44,44,44,44,
44,44,44,44,44,44,45,45,45,45,45,45,45,45,45,45,45,45,45,
45,45,45,45,45,45,45,45,45,45,45,45,45,45,45,45,45,45,45,
45,45,45,45,45,45,45,45,45,45,45,45,45,45,45,45,45,45,45,

46,46,46,46,46,46,46,46,46,46,46,46,46,46,46,46,46,46,46,46,
46,46,46,46,46,46,46,46,46,46,46,46,46,46,46,46,46,46,46,46,
46,46,46,46,46,46,46,46,46,46,46,46,47,47,47,47,47,47,47,
47,47,47,47,47,47,47,47,47,47,47,47,47,47,47,47,47,47,47,
47,47,47,47,47,47,47,47,47,47,47,47,47,47,47,47,47,47,47,
47,47,47,47,47,47,47,47,47,47,47,47,47,47,47,47,47,47,47,
47,47,47,47,47,47,47,47,47,47,47,47,48,48,48,48,48,48,48,
48,48,48,48,48,48,48,48,48,48,48,48,48,48,48,48,48,48,48,
48,48,48,48,48,48,48,48,48,48,48,48,48,48,48,48,48,48,48,
48,48,48,48,48,48,48,48,48,48,48,48,48,48,48,48,48,48,48,
48,48,48,48,48,48,48,48,48,48,48,49,49,49,49,49,49,49,
49,49,49,49,49,49,49,49,49,49,49,49,49,49,49,49,49,49,49,
49,49,49,49,49,49,49,49,49,49,49,49,49,49,49,49,49,49,49,
49,49,49,49,49,49,50,50,50,50,50,50,50,50,50,50,50,50,50,
50,50,50,50,50,50,50,50,50,50,50,50,50,50,50,50,50,50,50,
50,50,50,50,50,50,50,50,50,50,50,50,50,50,50,50,50,50,50,
50,50,50,50,50,50,50,50,50,50,50,50,50,50,50,50,50,50,50,
50,50,50,50,50,50,50,50,50,50,50,50,50,50,50,50,50,50,50,
50,50,50,50,50,50,50,50,50,50,50,50,51,51,51,51,51,51,51,
51,51,51,51,51,51,51,51,51,51,51,51,51,51,51,51,51,51,51,
51,51,51,51,51,51,51,51,51,51,51,51,51,51,51,51,51,51,51,
51,51,51,51,51,51,51,51,51,51,51,51,51,51,51,51,51,51,51,
51,51,51,51,51,51,51,51,51,51,51,51,51,51,51,51,51,51,51,
51,51,51,51,51,51,51,51,51,51,51,51,51,51,51,51,51,51}
This table contains 961 entries.

Table 9, intra quantisation look-up table for block positions (1,1),(1,3),(3,1),(3,3) :
{0,1,2,2,2,2,2,4,5,6,7,8,9,10,10,11,11,12,13,13,14,14,15,15,
15,16,16,16,17,17,17,17,18,18,18,19,19,19,19,20,20,20,20,21,
21,21,21,21,21,22,22,22,22,22,23,23,23,23,23,23,23,23,24,24,
24,24,24,24,25,25,25,25,25,25,25,25,26,26,26,26,26,26,26,
26,27,27,27,27,27,27,27,27,27,27,27,28,28,28,28,28,28,28,
28,28,29,29,29,29,29,29,29,29,29,29,29,29,29,29,30,30,
30,30,30,30,30,30,30,30,30,30,31,31,31,31,31,31,31,31,
31,31,31,31,31,31,31,31,32,32,32,32,32,32,32,32,32,32,32,32,
32,32,32,32,33,33,33,33,33,33,33,33,33,33,33,33,33,33,33,
33,33,33,33,33,33,33,33,33,34,34,34,34,34,34,34,34,34,34,34,
34,34,34,34,34,34,35,35,35,35,35,35,35,35,35,35,35,35,35,35,
35,35,35,35,35,35,35,35,35,35,35,35,35,35,35,35,35,35,36,
36,36,36,36,36,36,36,36,36,36,36,36,36,36,36,36,36,36,36,36,
36,36,36,36,37,37,37,37,37,37,37,37,37,37,37,37,37,37,37,37,
37,37,37,37,37,37,37,37,37,37,37,37,37,37,37,37,37,37,38,38,
38,38,38,38,38,38,38,38,38,38,38,38,38,38,38,38,38,38,38,
38,38,38,38,38,38,38,38,38,38,39,39,39,39,39,39,39,39,39,
39,39,39,39,39,39,39,39,39,39,39,39,39,39,39,39,39,39,39,
39,39,39,39,39,39,39,39,39,39,39,39,39,39,39,39,39,39,39,
39,40,40,40,40,40,40,40,40,40,40,40,40,40,40,40,40,40,40,
40,40,40,40,40,40,40,40,40,40,40,40,41,41,41,41,41,41,
41,41,41,41,41,41,41,41,41,41,41,41,41,41,41,41,41,41,41,
41,41,41,41,41,41,41,41,41,41,41,41,41,41,41,41,41,41,41,
41,41,41,41,41,41,41,41,41,41,41,41,41,41,41,41,41,41,41,
41,42,42,42,42,42,42,42,42,42,42,42,42,42,42,42,42,42,42,42,
42,42,42,42,42,42,42,42,42,42,42,42,42,42,42,42,42,42,42,
42,42,42,42,42,42,42,42,42,42,43,43,43,43,43,43,43,43,43,
43,43,43,43,43,43,43,43,43,43,43,43,43,43,43,43,43,43,43,43,
43,43,43,43,43,43,43,43,43,43,43,43,43,43,43,43,43,43,43,
43,43,43,43,43,43,43,43,43,43,43,43,43,43,43,43,43,43,44,44,
44,44,44,44,44,44,44,44,44,44,44,44,44,44,44,44,44,44,44,

44,44,44,44,44,44,44,44,44,44,44,44,44,44,44,44,44,44,44,
44,44,44,44,44,44,44,44,44,44,44,44,44,44,44,44,44,44,44,
44,44,44,44,45,45,45,45,45,45,45,45,45,45,45,45,45,45,45,45,
45,45,45,45,45,45,45,45,45,45,45,45,45,45,45,45,45,45,45,
45,45,45,45,45,45,45,45,45,45,45,45,45,45,45,45,45,45,45,
45,45,45,45,45,45,45,45,45,45,45,45,45,45,45,45,45,45,45,
45,45,45,45,45,45,45,45,45,45,45,45,45,45,45,45,45,45,45,
45,45,45,45,46,46,46,46,46,46,46,46,46,46,46,46,46,46,46,46,
46,46,46,46,46,46,46,46,46,46,46,46,46,46,46,46,46,46,46,
46,46,46,46,46,46,46,46,46,46,46,46,46,46,46,46,46,46,46,
46,46,46,46,46,46,46,46,46,46,47,47,47,47,47,47,47,47,47,
47,47,47,47,47,47,47,47,47,47,47,47,47,47,47,47,47,47,47,
47,47,47,47,47,47,47,47,47,47,47,47,47,47,47,47,47,47,47,
47,47,47,47,47,47,47,47,47,47,47,47,47,47,47,47,47,47,47,
47,47,47,47,47,47,47,47,47,47,47,47,47,47,47,47,47,47,47,
47,47,47,47,47,47,47,47,47,47,47,47,47,47,47,47,47,47,47,
47,47,47,47,47,47,47,47,47,47,47,47,47,47,47,47,47,47,47,
47,47,47,47,48,48,48,48,48,48,48,48,48,48,48,48,48,48,48,
48,48,48,48,48,48,48,48,48,48,48,48,48,48,48,48,48,48,48,
48,48,48,48,48,48,48,48,48,48,48,48,48,48,48,48,48,48,48,
48,48,48,48,48,48,48,48,48,48,48,48,48,48,48,48,48,48,48,
48,48,48,48,48,48,48,48,48,48,48,48,48,48,48,48,48,48,48,
48,48,48,48,49,49,49,49,49,49,49,49,49,49,49,49,49,49,49,
49,49,49,49,49,49,49,49,49,49,49,49,49,49,49,49,49,49,49,
49,49,49,49,49,49,49,49,49,49,49,49,49,49,49,49,49,49,49,
49,49,49,49,49,49,49,49,49,49,49,49,49,49,49,49,49,49,49,
49,49,49,49,49,49,49,49,49,49,49,49,49,49,49,49,49,49,49,
49,49,49,49,49,49,49,49,49,49,49,49,49,49,49,49,49,49,49,
49,49,49,49,49,49,49,49,49,49,49,49,49,49,49,49,49,50,50,
50,50,50,50,50,50,50,50,50,50,50,50,50,50,50,50,50,50,
50,50,50,50,50,50,50,50,50,50,50,50,50,50,50,50,50,50,50,
50,50,50,50,50,50,50,50,50,50,50,50,50,50,50,50,50,50,50,
50,50,50,50,50,50,50,50,50,50,50,50,50,50,50,50,50,50,50,
50,50,50,50,50,50,50,50,50,50,50,50,50,50,50,50,50,50,50,
50,50,50,50,50,50,50,50,50,50,50,50,50,50,50,50,50,50,50,
50,50,50,50,50,50,50,50,50,50,51,51,51,51,51,51,51,51,51,
51,51,51,51,51,51,51,51,51,51,51,51,51,51,51,51,51,51,51,
51,51,51,51,51,51,51,51,51,51,51,51,51,51,51,51,51,51,51,
51,51,51,51,51,51,51,51,51,51,51,51,51,51,51,51,51,51,51,
51,51,51,51,51,51,51,51,51,51,51,51,51,51,51,51,51,51,51,
51,51,51,51,51,51,51,51,51,51,51,51,51,51,51,51,51,51,51,
51,51,51,51,51,51,51,51,51,51,51,51,51,51,51,51,51,51,51,
51,51,51,51,51,51,51,51,51,51,51,51,51,51,51,51,51,51,51,
51,51,51,51,51,51,51,51,51,51,51,51,51,51,51,51,51,51,51,
51,51,51,51,51,51,51,51,51,51,51,51,51,51,51,51,51,51,51, 51,51,51,51,51,51,51,51,51,51}
This table contains 1534 entries.


Table 10, inter quantisation look-up table for block positions (0,0), (0,2), (2,0), (2,2):
{0,1,2,3,4,6,8,10,11,12,13,14,15,16,16,17,18,18,19,19,20,20,
20,21,21,22,22,22,23,23,23,24,24,24,24,25,25,25,26,26,26,26,
26,26,26,27,27,27,28,28,28,28,28,28,28,29,29,29,29,29,29,30,
30,30,30,30,30,30,31,31,31,31,31,31,31,32,32,32,32,32,32,32,
32,32,32,32,32,33,33,33,33,33,33,33,34,34,34,34,34,34,34,
34,34,34,34,34,34,35,35,35,35,35,35,35,35,35,35,35,35,35,36,
36,36,36,36,36,36,36,36,36,36,36,36,37,37,37,37,37,37,37,
37,37,37,37,37,37,38,38,38,38,38,38,38,38,38,38,38,38,38,38,
38,38,38,38,38,38,38,38,38,38,38,38,39,39,39,39,39,39,39,
39,39,39,39,39,39,40,40,40,40,40,40,40,40,40,40,40,40,40,40,

40,40,40,40,40,40,40,40,40,40,40,40,40,41,41,41,41,41,41,41,
41,41,41,41,41,41,41,41,41,41,41,41,41,41,41,41,41,41,42,
42,42,42,42,42,42,42,42,42,42,42,42,42,42,42,42,42,42,42,
42,42,42,42,42,42,43,43,43,43,43,43,43,43,43,43,43,43,43,43,
43,43,43,43,43,43,43,43,43,43,43,43,43,44,44,44,44,44,44,44,
44,44,44,44,44,44,44,44,44,44,44,44,44,44,44,44,44,44,44,
44,44,44,44,44,44,44,44,44,44,44,44,44,44,44,44,44,44,44,
44,44,44,44,44,44,45,45,45,45,45,45,45,45,45,45,45,45,45,45,
45,45,45,45,45,45,45,45,45,45,45,45,46,46,46,46,46,46,46,
46,46,46,46,46,46,46,46,46,46,46,46,46,46,46,46,46,46,46,
46,46,46,46,46,46,46,46,46,46,46,46,46,46,46,46,46,46,46,
46,46,46,46,46,46,47,47,47,47,47,47,47,47,47,47,47,47,47,47,
47,47,47,47,47,47,47,47,47,47,47,47,47,47,47,47,47,47,47,
47,47,47,47,47,47,47,47,47,47,47,47,47,47,47,47,47,47,48,
48,48,48,48,48,48,48,48,48,48,48,48,48,48,48,48,48,48,48,
48,48,48,48,48,48,48,48,48,48,48,48,48,48,48,48,48,48,48,
48,48,48,48,48,48,48,48,48,48,48,48,49,49,49,49,49,49,
49,49,49,49,49,49,49,49,49,49,49,49,49,49,49,49,49,49,
49,49,49,49,49,49,49,49,49,49,49,49,49,49,49,49,49,49,
49,49,49,49,49,49,50,50,50,50,50,50,50,50,50,50,50,50,50,50,
50,50,50,50,50,50,50,50,50,50,50,50,50,50,50,50,50,50,50,
50,50,50,50,50,50,50,50,50,50,50,50,50,50,50,50,50,50,50,
50,50,50,50,50,50,50,50,50,50,50,50,50,50,50,50,50,50,50,
50,50,50,50,50,50,50,50,50,50,50,50,50,50,50,50,50,50,50,
50,50,50,50,50,50,50,50,50,50,50,50,50,51,51,51,51,51,51,51,
51,51,51,51,51,51,51,51,51,51,51,51,51,51,51,51,51,51,51,
51,51,51,51,51,51,51,51,51,51,51,51,51,51,51,51,51,51, 51,51,51,51,51}
This table contains 747 entries.

Table 11, inter quantisation look-up table for block positions (0,1),(0,3),(1,0),(1,2),(2,1),(2,3),(3,0),(3,2) :
{0,1,2,2,2,2,4,6,7,8,9,10,11,12,12,13,14,14,15,15,16,16,17,
17,17,18,18,18,18,19,19,20,20,20,20,21,21,21,21,22,22,22,22,
23,23,23,23,23,23,24,24,24,24,24,24,24,25,25,25,25,26,26,26,
26,26,26,26,26,27,27,27,27,27,27,27,27,27,28,28,28,28,28,
28,28,29,29,29,29,29,29,29,29,29,29,29,30,30,30,30,30,30,
30,30,30,30,30,30,30,31,31,31,31,31,31,31,31,32,32,32,32,32,
32,32,32,32,32,32,32,32,32,32,32,32,33,33,33,33,33,33,33,33,
33,33,33,33,33,33,33,33,33,34,34,34,34,34,34,34,34,34,34,
34,34,34,34,34,35,35,35,35,35,35,35,35,35,35,35,35,35,35,35,
35,35,35,35,35,35,35,35,35,35,36,36,36,36,36,36,36,36,36,36,
36,36,36,36,36,36,36,36,36,36,36,36,36,36,37,37,37,37,37,
37,37,37,37,37,37,37,37,37,37,37,37,38,38,38,38,38,38,38,38,
38,38,38,38,38,38,38,38,38,38,38,38,38,38,38,38,38,38,38,
38,38,38,38,38,39,39,39,39,39,39,39,39,39,39,39,39,39,39,
39,39,39,39,39,39,39,39,39,39,39,39,39,39,39,39,39,39,40,
40,40,40,40,40,40,40,40,40,40,40,40,40,40,40,40,40,40,40,
40,40,40,40,40,40,40,40,40,40,40,41,41,41,41,41,41,41,41,
41,41,41,41,41,41,41,41,41,41,41,41,41,41,41,41,41,41,41,41,
41,41,41,41,41,41,41,41,41,41,41,41,41,41,41,41,41,41,41,
41,41,42,42,42,42,42,42,42,42,42,42,42,42,42,42,42,42,42,42,
42,42,42,42,42,42,42,42,42,42,42,42,42,42,42,42,42,42,42,
42,42,42,42,42,42,42,42,42,42,42,43,43,43,43,43,43,43,43,
43,43,43,43,43,43,43,43,43,43,43,43,43,43,43,43,43,43,43,
43,43,43,43,43,44,44,44,44,44,44,44,44,44,44,44,44,44,44,44,
44,44,44,44,44,44,44,44,44,44,44,44,44,44,44,44,44,44,44,
44,44,44,44,44,44,44,44,44,44,44,44,44,44,44,44,44,44,44,
44,44,44,44,44,44,44,44,44,44,44,44,45,45,45,45,45,45,45,45,
45,45,45,45,45,45,45,45,45,45,45,45,45,45,45,45,45,45,45,45,

45,45,45,45,45,45,45,45,45,45,45,45,45,45,45,45,45,45,45,45,
45,45,45,45,45,45,45,45,45,45,45,45,45,45,45,45,45,45,45,46,
46,46,46,46,46,46,46,46,46,46,46,46,46,46,46,46,46,46,46,46,
46,46,46,46,46,46,46,46,46,46,46,46,46,46,46,46,46,46,46,46,
46,46,46,46,46,46,46,46,46,46,46,46,46,46,46,46,46,46,46,46,
46,46,46,46,46,47,47,47,47,47,47,47,47,47,47,47,47,47,47,47,
47,47,47,47,47,47,47,47,47,47,47,47,47,47,47,47,47,47,47,47,
47,47,47,47,47,47,47,47,47,47,47,47,47,47,47,47,47,47,47,47,
47,47,47,47,47,47,47,47,47,47,47,47,47,47,47,47,47,47,47,47,
47,47,47,47,47,47,47,47,47,47,47,47,47,47,47,47,47,47,47,47,
47,47,47,47,47,48,48,48,48,48,48,48,48,48,48,48,48,48,48,48,
48,48,48,48,48,48,48,48,48,48,48,48,48,48,48,48,48,48,48,48,
48,48,48,48,48,48,48,48,48,48,48,48,48,48,48,48,48,48,48,48,
48,48,48,48,48,48,48,48,48,48,48,48,48,48,48,48,48,48,48,48,
48,48,48,48,48,48,48,48,48,48,48,48,48,48,48,48,48,48,48,48,
48,48,48,48,48,49,49,49,49,49,49,49,49,49,49,49,49,49,49,49,
49,49,49,49,49,49,49,49,49,49,49,49,49,49,49,49,49,49,49,49,
49,49,49,49,49,49,49,49,49,49,49,49,49,49,49,49,49,49,49,49,
49,49,49,49,49,49,49,49,49,49,49,50,50,50,50,50,50,50,50,
50,50,50,50,50,50,50,50,50,50,50,50,50,50,50,50,50,50,50,
50,50,50,50,50,50,50,50,50,50,50,50,50,50,50,50,50,50,50,
50,50,50,50,50,50,50,50,50,50,50,50,50,50,50,50,50,50,50,
50,50,50,50,50,50,50,50,50,50,50,50,50,50,50,50,50,50,50,
50,50,50,50,50,50,50,50,50,50,50,50,50,50,50,50,50,50,50,
50,50,50,50,50,50,50,50,50,50,50,50,50,50,50,50,50,50,50,
50,50,50,50,50,51,51,51,51,51,51,51,51,51,51,51,51,51,51,
51,51,51,51,51,51,51,51,51,51,51,51,51,51,51,51,51,51,51,
51,51,51,51,51,51,51,51,51,51,51,51,51,51,51,51,51,51,51,
51,51,51,51,51,51,51,51,51,51,51,51,51,51,51,51,51,51,51,
51,51,51,51,51,51,51,51,51,51,51,51,51,51,51,51,51,51,51,
51,51,51,51,51,51,51,51,51,51,51,51,51,51,51,51,51,51,51,
51,51,51,51,51,51,51,51,51,51,51,51,51,51,51,51,51}
This table contains 1201 entries.

Table 12, inter quantisation look-up table for block positions (1,1),(1,3),(3,1),(3,3) :
{0,1,2,2,2,2,2,3,4,5,6,7,8,8,9,10,10,11,11,12,12,13,13,13,
14,14,14,15,15,15,16,16,16,17,17,17,17,17,18,18,18,18,19,19,
19,19,19,20,20,20,20,20,20,21,21,21,21,21,21,21,22,22,22,22,
22,22,23,23,23,23,23,23,23,23,23,24,24,24,24,24,24,24,24,
25,25,25,25,25,25,25,25,25,25,26,26,26,26,26,26,26,26,26,26,
26,27,27,27,27,27,27,27,27,27,27,27,27,27,27,28,28,28,28,
28,28,28,28,28,28,28,29,29,29,29,29,29,29,29,29,29,29,29,
29,29,29,29,29,29,29,30,30,30,30,30,30,30,30,30,30,30,
30,30,30,31,31,31,31,31,31,31,31,31,31,31,31,31,31,31,31,
31,31,31,31,32,32,32,32,32,32,32,32,32,32,32,32,32,32,32,
32,32,32,32,32,33,33,33,33,33,33,33,33,33,33,33,33,33,33,
33,33,33,33,33,33,33,33,33,33,33,33,33,33,33,33,34,34,34,34,
34,34,34,34,34,34,34,34,34,34,34,34,34,34,34,34,35,35,35,
35,35,35,35,35,35,35,35,35,35,35,35,35,35,35,35,35,35,
35,35,35,35,35,35,35,35,35,35,35,35,35,35,35,35,35,35,36,
36,36,36,36,36,36,36,36,36,36,36,36,36,36,36,36,36,36,36,
36,36,36,36,36,36,36,36,36,36,37,37,37,37,37,37,37,37,37,37,
37,37,37,37,37,37,37,37,37,37,37,37,37,37,37,37,37,37,37,
37,37,37,37,37,37,37,37,37,37,37,37,38,38,38,38,38,38,38,38,
38,38,38,38,38,38,38,38,38,38,38,38,38,38,38,38,38,38,38,38,
38,38,38,38,38,38,38,38,38,38,38,38,38,39,39,39,39,39,39,
39,39,39,39,39,39,39,39,39,39,39,39,39,39,39,39,39,39,39,
39,39,39,39,39,39,39,39,39,39,39,39,39,39,39,39,39,39,39,

39,39,39,39,39,39,39,39,39,39,39,39,39,39,39,39,40,40,40,40,
40,40,40,40,40,40,40,40,40,40,40,40,40,40,40,40,40,40,40,40,
40,40,40,40,40,40,40,40,40,40,40,40,40,40,40,40,41,41,41,
41,41,41,41,41,41,41,41,41,41,41,41,41,41,41,41,41,41,41,
41,41,41,41,41,41,41,41,41,41,41,41,41,41,41,41,41,41,41,
41,41,41,41,41,41,41,41,41,41,41,41,41,41,41,41,41,41,41,
41,41,41,41,41,41,41,41,41,41,41,41,41,41,41,41,41,41,41,
41,42,42,42,42,42,42,42,42,42,42,42,42,42,42,42,42,42,42,42,
42,42,42,42,42,42,42,42,42,42,42,42,42,42,42,42,42,42,42,
42,42,42,42,42,42,42,42,42,42,42,42,42,42,42,42,42,42,42,
42,42,42,43,43,43,43,43,43,43,43,43,43,43,43,43,43,43,43,43,
43,43,43,43,43,43,43,43,43,43,43,43,43,43,43,43,43,43,43,43,
43,43,43,43,43,43,43,43,43,43,43,43,43,43,43,43,43,43,43,43,
43,43,43,43,43,43,43,43,43,43,43,43,43,43,43,43,43,43,43,43,
43,43,43,43,43,43,43,44,44,44,44,44,44,44,44,44,44,44,44,44,
44,44,44,44,44,44,44,44,44,44,44,44,44,44,44,44,44,44,44,44,
44,44,44,44,44,44,44,44,44,44,44,44,44,44,44,44,44,44,44,44,
44,44,44,44,44,44,44,44,44,44,44,44,44,44,44,44,44,44,44,44,
44,44,44,44,44,44,44,44,44,45,45,45,45,45,45,45,45,45,45,
45,45,45,45,45,45,45,45,45,45,45,45,45,45,45,45,45,45,45,45,
45,45,45,45,45,45,45,45,45,45,45,45,45,45,45,45,45,45,45,45,
45,45,45,45,45,45,45,45,45,45,45,45,45,45,45,45,45,45,45,45,
45,45,45,45,45,45,45,45,45,45,45,45,45,45,45,45,45,45,45,45,
45,45,45,45,45,45,45,45,45,45,45,45,45,45,46,46,46,46,46,
46,46,46,46,46,46,46,46,46,46,46,46,46,46,46,46,46,46,46,46,
46,46,46,46,46,46,46,46,46,46,46,46,46,46,46,46,46,46,46,46,
46,46,46,46,46,46,46,46,46,46,46,46,46,46,46,46,46,46,46,46,
46,46,46,46,46,46,46,46,46,46,46,46,46,46,46,46,46,46,47,47,
47,47,47,47,47,47,47,47,47,47,47,47,47,47,47,47,47,47,47,47,
47,47,47,47,47,47,47,47,47,47,47,47,47,47,47,47,47,47,47,47,
47,47,47,47,47,47,47,47,47,47,47,47,47,47,47,47,47,47,47,47,
47,47,47,47,47,47,47,47,47,47,47,47,47,47,47,47,47,47,47,47,
47,47,47,47,47,47,47,47,47,47,47,47,47,47,47,47,47,47,47,47,
47,47,47,47,47,47,47,47,47,47,47,47,47,47,47,47,47,47,47,47,
47,47,47,47,47,47,47,47,47,47,47,47,47,47,47,47,47,47,47,47,
47,47,47,47,47,47,47,47,47,47,47,47,47,47,47,47,47,47,47,47,
47,47,47,47,47,48,48,48,48,48,48,48,48,48,48,48,48,48,48,48,
48,48,48,48,48,48,48,48,48,48,48,48,48,48,48,48,48,48,48,48,
48,48,48,48,48,48,48,48,48,48,48,48,48,48,48,48,48,48,48,48,
48,48,48,48,48,48,48,48,48,48,48,48,48,48,48,48,48,48,48,48,
48,48,48,48,48,48,48,48,48,48,48,48,48,48,48,48,48,48,48,48,
48,48,48,48,48,48,48,48,48,48,48,48,48,48,48,48,48,48,48,48,
48,48,48,48,48,48,48,48,48,49,49,49,49,49,49,49,49,49,49,
49,49,49,49,49,49,49,49,49,49,49,49,49,49,49,49,49,49,49,49,
49,49,49,49,49,49,49,49,49,49,49,49,49,49,49,49,49,49,49,49,
49,49,49,49,49,49,49,49,49,49,49,49,49,49,49,49,49,49,49,49,
49,49,49,49,49,49,49,49,49,49,49,49,49,49,49,49,49,49,49,49,
49,49,49,49,49,49,49,49,49,49,49,49,49,49,49,49,49,49,49,49,
49,49,49,49,49,49,49,49,49,49,49,49,49,49,49,49,49,49,49,49,
49,49,49,49,49,49,49,49,49,49,49,49,49,49,49,49,49,49,49,49,
49,49,49,49,49,49,49,49,49,49,49,49,49,49,49,49,50,50,50,
50,50,50,50,50,50,50,50,50,50,50,50,50,50,50,50,50,50,50,
50,50,50,50,50,50,50,50,50,50,50,50,50,50,50,50,50,50,50,
50,50,50,50,50,50,50,50,50,50,50,50,50,50,50,50,50,50,50,50,
50,50,50,50,50,50,50,50,50,50,50,50,50,50,50,50,50,50,50,50,
50,50,50,50,50,50,50,50,50,50,50,50,50,50,50,50,50,50,50,50,
50,50,50,50,50,50,50,50,50,50,50,50,50,50,50,50,50,50,50,50,

50,50,50,50,50,50,50,50,50,50,50,50,50,50,50,50,50,50,50,50,

50,50,50,50,50,50,50,50,50,50,50,50,50,50,50,50,50,50,50,50,

50,50,50,51,51,51,51,51,51,51,51,51,51,51,51,51,51,51,51,51,

51,51,51,51,51,51,51,51,51,51,51,51,51,51,51,51,51,51,51,51,

51,51,51,51,51,51,51,51,51,51,51,51,51,51,51,51,51,51,51,51,

51,51,51,51,51,51,51,51,51,51,51,51,51,51,51,51,51,51,51,51,

51,51,51,51,51,51,51,51,51,51,51,51,51,51,51,51,51,51,51,51,

51,51,51,51,51,51,51,51,51,51,51,51,51,51,51,51,51,51,51,51,

51,51,51,51,51,51,51,51,51,51,51,51,51,51,51,51,51,51,51,51,

51,51,51,51,51,51,51,51,51,51,51,51,51,51,51,51,51,51,51,51,

51,51,51,51,51,51,51,51,51,51,51,51,51,51,51,51,51,51,51,51,

51,51,51,51,51,51,51,51,51,51,51,51,51,51,51,51,51,51,51,

51,51,51,51,51,51,51,51,51,51,51,51,51,51,51,51,51,51,51,

51,51,51,51,51,51,51,51,51,51,51,51,51,51,51,51,51,51,51, 51,51,51,51,51,51,51,51,51,51,51}

This table contains 1917 entries.

The magnitude value of every current candidate transform coefficient addresses the corresponding one from tables 7 to 12. The look-up table output is a corresponding QP number between '0' and '51'. For example, if the current transform coefficient belongs to position (0,0) in an intra block and its magnitude value is '5', only QP=6 or higher can be used to quantise it to zero. Accordingly, in table 7 the position '5' maps to QP=6. E.g. for an intra block, if the current transform coefficient magnitude is between 1482 and 1534 and has a position (1,1), this coefficient is automatically mapped to QP=51.

For intra block coefficient magnitudes greater than 1482 the tables 7 to 10 are not (i.e. need not be) addressed. E.g. for intra block coefficient magnitudes greater than 598 and block positions (0,0), (0,2), (2,0), (2,2) table 7 is not (i.e. need not be) addressed.

These six tables 7 to 12 can be used to quickly map, taking into account the current position in the block and the intra or inter type, between the magnitude of a current transform coefficient and the QP for which this transform coefficient will be quantised to zero.

The QP value resulting from tables 7 to 12 addresses the corresponding one of tables 1 to 6, i.e. table 7 is related to table 1, table 8 is related to table 2, and so on. The output from the corresponding one of tables 1 to 6 is the actual quantisation threshold value for the current coefficient magnitude and a given QP.

For each candidate QP value the resulting number of zero coefficients of the block is summed up, following quantisation using the corresponding quantisation threshold value from tables 1 to 6, so that the functions $\rho_I(QP)$ and $\rho_P(QP)$ can be established.

Thus, when using the tables 1 to 12 it can be easily determined for a block of transform values how many of them will become zero if a specific QP is applied in the quantisation. Using the above tables speeds up the computation and allows to avoid the comparison step (i.e. the if-clause) in equations (5).

The above table processing is depicted by Fig. 2. Tables 7 to 12, which receive the transform value TRV and output the quantisation parameter QP, can be regarded as inner table ITBL. The actual number NZQP of zero coefficients for a given QP is calculated using the tables 1 to 6, which can be regarded as outer table OTBL.

The p-QP lookup mapping table can be built up according to tables 7 to 12. For each QP, the total number of zero coefficients in a transform block can be read from tables 7 to 12. The total number of zero coefficients in a frame for the current QP is summed up from the total number of zero coefficients in a transform block. Finally, this results in the p-QP lookup mapping table, the size of which is 52, corresponding to QP=0 to QP=51.

*Rate control*

The following processing is carried out for the actual encoding of frames of the video sequence.

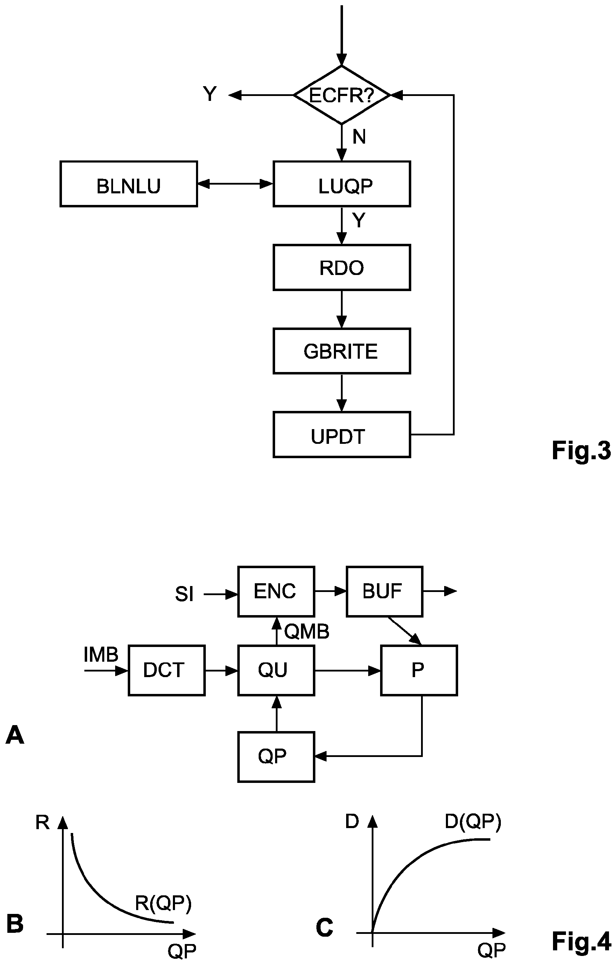

The inventive rate control is shown in connection with Fig. 3. It is checked in a stage ECFR whether or not the end of the current frame has been reached for the processing of the macroblocks. If true, the macroblock processing for the following frame will start. If not true, the following macroblock in the current frame is checked (for intra mode) in a stage LUQP which accesses a memory BLNLU containing the above-described bi-linear look-up tables 1 to 12, and which stage LUQP calculates the current total bitrate and the $\Theta$ value (see equation (3)) for the current frame. Then a rate/distortion optimisation step RDO is carried out, using the current $\rho_I$ value. Thereafter the bit rates for the 16*16 inter mode coding of the corresponding macroblock are computed in a stage GBRITE. After performing RDO for each macroblock, the $\rho$ value is adjusted. A following updating stage UPDT computes the real total number of bits and the total number of quantised zero transform coefficients and the value $\Theta$, from the first macroblock of the frame until the current macroblock of the frame.

*Step A)*

For achieving a low encoding delay condition, it can be assumed that (e.g. for a coding unit such as a group of pictures) only P frames are encoded after the first I frame. Hence the (virtual) encoder buffer can be initialised as follows:

$$B = R/F - \Delta,$$
$$\Delta = \begin{cases} W/F, & W > Z \bullet \Phi \\ W - Z \bullet M, & otherwise \end{cases}$$
$$W = \max(W_{prev} + B' - R/F, 0) \tag{6}$$

wherein $B$ is the target number of bits for a frame (including the bits for quantised transform coefficients, motion vectors and header information), $R$ is the channel rate in bits per second, $F$ is the frame rate in frames per second, $W$ is the number of bits in the encoder buffer and represents a
modification value for a frame which will be updated after a frame has been coded, $\Phi$ is the maximum buffer size, $W_{prev}$ is the previous number of bits in the buffer, $B'$ is the actual number of bits used for encoding the previous frame, $M$ is the number of transform coefficients in the current macroblock, and $Z = 0.1$ is set as a default value to achieve a low delay. Then the linear model parameter value $\Theta$ is set to 1.5, and the total number of macroblocks for the current frame is initialised.

*Step B)*

Following the above-described pre-processing step, the mapping table between $\rho$ and QP (0...51) for each macroblock is obtained.
The QP can be obtained from the above-mentioned $\rho$-QP lookup mapping table using equation (7):

$$\rho = 384(N - N_m) - (R_C - R_m)/\Theta \tag{7}$$

wherein 384 is the number of transform coefficients in a macroblock, $N$ is the number of macroblocks per frame, $N_m$ is the number of macroblocks which have already been coded in the current frame, $R_c$ is the encoder output bit rate in bits per second for the current frame, and $R_m$ is the number of bits used by the already encoded macroblocks in the current frame.
When determining the QP for the encoding of the current macroblock, a bi-linear search method can be used to get QP from a P/QP frame mapping table, which is the sum of the macroblock $\rho$/QP mapping tables described in equations (5).
By using the neighbouring information among the macroblocks, the QP of the current macroblock advantageously is constrained by using the average of the QPs for all prior macroblocks in the current frame until the current macroblock, cf. the pseudo codes (8) and (9). The spatial variations of QP in a frame are preferably smaller than $\pm 3$ QP values. Advantageously the difference between the average QP of the current frame and the average QP of previous pictures can be constrained, too. The temporal variations of QP between frames are preferably smaller than $\pm 4$ QP values.
According to the goal that the QP of neighbouring macroblocks should not vary too much, the QP of the current macroblock is constrained using the average of the QPs (Aver-ageQP) for all prior macroblocks (mb) in the current frame until the current macroblock. This can described by the following pseudo-code:

```
TempAverageQP = SumQP/number_mb
if(absolute(Delta =(CurrentQP - TempAverageQP))>3)
{
if(Delta<0)
   Delta = 3;
else
   Delta = -3;
CurrentQP = TempAverageQP - Delta;
}                                                                 (8)
```

wherein SumQP is the total sum of all QP values in the current frame until the current macroblock, TempAverageQP is the average QP in the current frame until the current macroblock, CurrentQP is the QP of the current macroblock, and "absolute" means calculating the absolute value.

According to the goal that the QP for corresponding macroblocks in temporally adjacent frames should not vary too much, the QP of the current macroblock is further constrained as described by the following pseudo-code:

```
if(absolute(Delta =(CurrentQP - AverageRhoQP))>4)
{
if(Delta<0)
  Delta = 4;
else
  Delta = -4;
CurrentQP = AverageRhoQP - Delta;
}
```

wherein AverageRhoQP is the average QP of one or more previous frames, which can be selected according to the $\Theta$ value difference of the different frames.

*Step C)*

Get the number of zero coefficients ($\rho$) and of bits for the current macroblock and then update the header and the encoding buffer.

*Step D)*

Repeat steps *B* and *C* until the end of the current frame.

Fig. 4B shows the encoding output bit rate as a known function of QP for a given distortion (i.e. the encoding error), whereas Fig. 4C shows the distortion (i.e. the encoding error) as a known function of QP for a given bit rate. In Fig. 4A an input macroblock IMB enters a transform stage DCT. The resulting transform coefficients are quantised in a quantiser QU, the characteristic of which is controlled by the quantisation parameter QP. In the pre-processing the $\rho$ value for each macroblock is determined in a $\rho$-stage $\rho$ using candidate QPs and the tables 1 to 12. These tables may be stored in stage $\rho$ or in a controller (not depicted). Quantiser QU outputs the quantised macroblock data QMB to an encoder ENC, e.g. an entropy encoder which may also receive side information SI like motion vectors and header data. The output data of encoder ENC pass through an encoder buffer BUF that outputs the bits to the following channel. Stage $\rho$, or the controller, also receives information about the filling level of buffer BUF and sets the QP for each macroblock according to the invention, applying a rate/distortion optimisation based on the percentage of zero transform coefficients and on an adaptation of the QP with respect to the QP of spatially and/or temporally adjacent macroblocks.

The invention can be used e.g. in a PC or a DSP platform for real-time encoding. It can also be used for other video coding standards like e.g. MPEG2-Video.

A bit stream that was encoded according to the invention can be recorded on a storage medium, e.g. a DVD, Bluray or HD-DVD optical disc.

**Claims**

1. Method for controlling the encoder output bit rate in a block-based video encoder, wherein the transform (DCT) coefficients derived from a pixel block are quantised (QU) using a variable quantisation parameter (QP) and are encoded, and wherein said quantisation parameter is related to the quantiser step size and said pixel blocks can be coded in intra mode (Intra) or in inter mode (Inter), said method including the steps:

   - determining (RHOITATBL, RHOIETBL) for each macroblock of a frame containing one or more of said blocks of transform coefficients, which percentage $\rho$ of the quantised coefficients gets the amplitude 'zero' depending on an applied value (QP) of said quantisation parameter;
   - based on the resulting information about the $\rho$ value/ quantisation parameter relationship for the macroblocks of said frame, controlling the encoder output bit rate $R$ for said frame, when processing said macroblocks, by using said quantisation parameter value (QP) such that the control of the bit rate $R$ is based on $R(\rho) = \Theta^*(100-\rho)$, $\Theta$ being a constant,

   **characterised by**:

   - when controlling the encoder output bit rate $R$ by using said quantisation parameter value, the quantisation parameter value applied to the current macroblock is constrained by a pre-determined deviation from the average of the quantisation parameter values for all prior macroblocks in the current frame until the current macroblock, wherein said percentage $\rho$ determination (RHOITATBL, RHOIETBL) for each macroblock of transform coefficients of a frame is carried out using two different types of look-up tables,
   a first type mapping the coding mode (Intra, Inter), the position (i, j) of a transform coefficient in a block and the magnitude value of transform coefficients to a corresponding candidate quantisation parameter value,
   a second type mapping the coding mode (Intra, Inter), the position (i, j) of a transform coefficient in a block and a candidate quantisation parameter (QP) to an applicable quantisation threshold value for a quantisation parameter.

2. A block-based video encoder apparatus, wherein for controlling the encoder output bit rate the transform (DCT) coefficients derived from a pixel block are quantised (QU) using a variable quantisation parameter (QP) and are encoded, and wherein said quantisation parameter is related to the quantiser step size and said pixel blocks can be coded in intra mode (Intra) or in inter mode (Inter), said apparatus including:

   - means (RHOITATBL, RHOIETBL; $\rho$) being adapted for determining for each macroblock of a frame containing one or more of said blocks of transform coefficients, which percentage $\rho$ of the quantised coefficients gets the amplitude 'zero' depending on an applied value (QP) of said quantisation parameter;
   - controlling means (ECFR, LUQP, RDO, GBRITE, UPDT) being adapted for controlling, based on the resulting information about the $\rho$ value/quantisation parameter relationship for the macroblocks of said frame, the encoder output bit rate $R$ for said frame, when processing said macroblocks, by using said quantisation parameter value (QP) such that the control of the bit rate $R$ is based on $R(\rho) = \Theta^*(100-\rho)$, $\Theta$ being a constant,
   - **characterised by**:

      when controlling the encoder output bit rate $R$ by using said quantisation parameter value, said controlling means constrain the quantisation parameter value applied to the current macroblock by a pre-determined deviation from the average of the quantisation parameter values for all prior macroblocks in the current frame until the current macroblock,
      wherein said percentage $\rho$ determination (RHOITATBL, RHOIETBL) for each macroblock of transform coefficients of a frame is carried out using two different types of look-up tables,
      a first type mapping the coding mode (Intra, Inter), the position (i, j) of a transform coefficient in a block and the magnitude value of transform coefficients to a corresponding candidate quantisation parameter value,
      a second type mapping the coding mode (Intra, Inter), the position (i, j) of a transform coefficient in a block and a candidate quantisation parameter (QP) to an applicable quantisation threshold value for a quantisation parameter.

3. Method according to claim 1, or apparatus according to claim 2, wherein said video encoder encodes an MPEG4-AVC video signal.

4. Method according to the method of claim 1 or 3, or apparatus according to the apparatus of claim 2 or 3, wherein the quantisation parameter value applied to the current macroblock in the current frame is constrained such that the average of the quantisation parameter values applied to the previous macroblocks in the current frame does not deviate more than a pre-determined value from the average of the quantisation parameter values applied to the macroblocks in a previous frame.

**5.** Method according to the method of one of claims 1, 3 and 4, or apparatus according to the apparatus of one of claims 2 to 4, wherein when determining (RHOITATBL, RHOIETBL) for each macroblock of a frame which percentage $\rho$ of the quantised coefficients gets the amplitude 'zero' depending on an applied value (QP) of said quantisation parameter, for said blocks, when processed according to intra coding mode, a 16*16-intra prediction only is carried out using the modes DC prediction, horizontal prediction and vertical prediction.

**6.** Method according to the method of claim 5, or apparatus according to the apparatus of claim 5, wherein as an estimation for the intra macroblock to be reconstructed the picture content of the original frame is used as the reconstruction.

## Patentansprüche

**1.** Verfahren zum Steuern der Codiererausgangsbitrate in einem blockbasierten Videocodierer, wobei die von einem Pixelblock abgeleiteten Transformationskoeffizienten (DCT-Koeffizienten) unter Verwendung eines variablen Quantisierungsparameters (QP) quantisiert werden (QU) und codiert werden und wobei der Quantisierungsparameter mit der Quantisiererschrittweite zusammenhängt und wobei die Pixelblöcke in einer Intra-Betriebsart (Intra) oder in einer Inter-Betriebsart (Inter) codiert werden können, wobei das Verfahren die folgenden Schritte enthält:

- Bestimmen (RHOITATBL, RHOIETBL), welcher Prozentsatz $\rho$ der quantisierten Koeffizienten in Abhängigkeit von einem angewendeten Wert (QP) des Quantisierungsparameters die Amplitude 'null' erhält, für jeden Makroblock eines Einzelbilds, das einen oder mehrere der Blöcke von Transformationskoeffizienten enthält;
- Steuern der Codiererausgangsbitrate R für das Einzelbild unter Verwendung des Quantisierungsparameterwerts (QP) in der Weise, dass die Steuerung der Bitrate R auf R($\rho$) = $\Theta \cdot$ (100-$\rho$) beruht, wobei $\Theta$ eine Konstante ist, auf der Grundlage der resultierenden Informationen über die $\rho$-Wert/Quantisierungsparameter-Beziehung für die Makroblöcke des Einzelbilds, wenn die Makroblöcke verarbeitet werden,
**dadurch gekennzeichnet, dass**
- der auf den gegenwärtigen Makroblock angewendete Quantisierungsparameterwert durch eine vorgegebene Abweichung von dem Durchschnitt der Quantisierungsparameterwerte für alle früheren Makroblöcke in dem gegenwärtigen Einzelbild bis zu dem gegenwärtigen Makroblock beschränkt wird, wenn die Codiererausgangsbitrate R unter Verwendung des Quantisierungsparameterwerts gesteuert wird,
wobei die Bestimmung des Prozentsatzes $\rho$ (RHOITATBL, RHOIETBL) für jeden Makroblock von Transformationskoeffizienten eines Einzelbilds unter Verwendung von zwei Typen von Nachschlagetabellen ausgeführt wird, wobei ein erster Typ die Codierungsbetriebsart (Intra, Inter), die Position (i, j) eines Transformationskoeffizienten in einem Block und den Größenwert von Transformationskoeffizienten auf einen entsprechenden Quantisierungsparameterwertkandidaten abbildet,
wobei ein zweiter Typ die Codierungsbetriebsart (Intra, Inter), die Position (i, j) eines Transformationskoeffizienten in einem Block und einen Quantisierungsparameterkandidaten (QP) auf einen anwendbaren Quantisierungsschwellenwert für einen Quantisierungsparameter abbildet.

**2.** Blockbasierte Videocodierervorrichtung, wobei zum Steuern der Codiererausgangsbitrate die von einem Pixelblock abgeleiteten Transformationskoeffizienten (DCT-Koeffizienten) unter Verwendung eines variablen Quantisierungsparameters (QP) quantisiert werden (QU) und codiert werden und wobei der Quantisierungsparameter mit der Quantisiererschrittweite zusammenhängt und wobei die Pixelblöcke in einer Intra-Betriebsart (Intra) oder in einer Inter-Betriebsart (Inter) codiert werden können, wobei die Vorrichtung enthält:

- Mittel (RHOITATBL, RHOIETBL; $\rho$), die dafür ausgelegt sind, für jeden Makroblock eines Einzelbilds, das einen oder mehrere der Blöcke von Transformationskoeffizienten enthält, zu bestimmen, welcher Prozentsatz $\rho$ der quantisierten Koeffizienten in Abhängigkeit von einem angewendeten Wert (QP) des Quantisierungsparameters die Amplitude 'null' erhält;
- Steuermittel (ECFR, LUQP, RDO, GBRITE, UPDT), die dafür ausgelegt sind, auf der Grundlage der resultierenden Informationen über die $\rho$-Wert/Quantisierungsparameter-Beziehung für die Makroblöcke des Einzelbilds die Codiererausgangsbitrate R für das Einzelbild unter Verwendung des Quantisierungsparameterwerts (QP) in der Weise zu steuern, dass die Steuerung der Bitrate R auf R($\rho$) = $\Theta$ · (100-$\rho$) beruht, wobei $\Theta$ eine Konstante ist, wenn die Makroblöcke verarbeitet werden,

- **dadurch gekennzeichnet, dass**

die Steuermittel den auf den gegenwärtigen Makroblock angewendeten Quantisierungsparameterwert durch eine vorgegebene Abweichung von dem Durchschnitt der Quantisierungsparameterwerte für alle früheren Makroblöcke in dem gegenwärtigen Einzelbild bis zu dem gegenwärtigen Makroblock beschränken, wenn die Codiererausgangsbitrate R unter Verwendung des Quantisierungsparameterwerts gesteuert wird,

wobei die Bestimmung des Prozentsatzes $\rho$ (RHOITATBL, RHOIETBL) für jeden Makroblock von Transformationskoeffizienten eines Einzelbilds unter Verwendung von zwei Typen von Nachschlagetabellen ausgeführt wird, wobei ein erster Typ die Codierungsbetriebsart (Intra, Inter), die Position (i, j) eines Transformationskoeffizienten in einem Block und den Größenwert von Transformationskoeffizienten auf einen entsprechenden Quantisierungsparameterwertkandidaten abbildet,

wobei ein zweiter Typ die Codierungsbetriebsart (Intra, Inter), die Position (i, j) eines Transformationskoeffizienten in einem Block und einen Quantisierungsparameterkandidaten (QP) auf einen anwendbaren Quantisierungsschwellenwert für einen Quantisierungsparameter abbildet.

3. Verfahren nach Anspruch 1 oder Vorrichtung nach Anspruch 2, wobei der Videocodierer ein MPEG4-AVC-Videosignal codiert.

4. Verfahren nach dem Verfahren nach Anspruch 1 oder 3 oder Vorrichtung nach der Vorrichtung nach Anspruch 2 oder 3, wobei der auf den gegenwärtigen Makroblock in dem gegenwärtigen Einzelbild angewendete Quantisierungsparameterwert in der Weise beschränkt wird, dass der Durchschnitt der auf die vorhergehenden Makroblöcke in dem gegenwärtigen Einzelbild angewendeten Quantisierungsparameterwerte von dem Durchschnitt der auf die Makroblöcke in einem vorhergehenden Einzelbild angewendeten Quantisierungsparameterwerte nicht mehr als einen vorgegebenen Wert abweicht.

5. Verfahren nach dem Verfahren nach einem der Ansprüche 1, 3 und 4 oder Vorrichtung nach der Vorrichtung nach einem der Ansprüche 2 bis 4, wobei für die Blöcke eine 16 · 16-Intra-Prädiktion nur unter Verwendung der Betriebsarten Gleichstromprädiktion, horizontale Prädiktion und vertikale Prädiktion ausgeführt wird, wenn in Übereinstimmung mit der Intra-Codierungsbetriebsart verarbeitet wird, wenn für jeden Makroblock eines Einzelbilds bestimmt wird (RHOITATBL, RHOIETBL), welcher Prozentsatz $\rho$ der quantisierten Koeffizienten in Abhängigkeit von einem angewendeten Wert (QP) des Quantisierungsparameters die Amplitude 'null' erhält.

6. Verfahren nach dem Verfahren nach Anspruch 5 oder Vorrichtung nach der Vorrichtung nach Anspruch 5, wobei als ein Schätzwert für den zu rekonstruierenden Intra-Makroblock der Bildinhalt des Ausgangsbilds als die Rekonstruktion verwendet wird.

**Revendications**

1. Procédé pour réguler le débit de sortie dans un codeur vidéo par blocs, dans lequel les coefficients de transformée (DCT) dérivés d'un bloc de pixels sont quantifiés (QU) à l'aide d'un paramètre de quantification variable (QP) et sont codés, et dans lequel ledit paramètre de quantification est lié au pas de quantification et lesdits blocs de pixels peuvent être codés en mode intra (Intra) ou en mode inter (Inter), ledit procédé comprenant les étapes consistant à :

- déterminer (RHOITATBL, RHOIETBL), pour chaque macrobloc d'une trame contenant un ou plusieurs desdits blocs de coefficients de transformée, quel pourcentage $\rho$ des coefficients quantifiés a une amplitude de « zéro » selon une valeur appliquée (QP) dudit paramètre de quantification ;
- selon les informations obtenues concernant la relation valeur $\rho$/paramètre de quantification pour les macroblocs de ladite trame, réguler le débit de sortie $R$ du codeur pour ladite trame, lors du traitement desdits macroblocs, à l'aide de ladite valeur de paramètre de quantification (QP) de sorte que la régulation du débit $R$ soit basée sur $R(\rho) = \theta*(100-\rho)$, $\theta$ étant une constante,

**caractérisé en ce que** :

- lors de la régulation du débit de sortie $R$ du codeur à l'aide de ladite valeur de paramètre de quantification, la valeur de paramètre de quantification appliquée au macrobloc courant est contrainte par un écart prédéterminé par rapport à la moyenne des valeurs de paramètre de quantification pour tous les macroblocs précédents de la trame courante jusqu'au macrobloc courant,

dans lequel ladite détermination du pourcentage p (RHOITATBL, RHOIETBL) pour chaque macrobloc de coefficients de transformée d'une trame est réalisée à l'aide de deux types de tables de recherche différents, un premier type pour le mappage du mode de codage (Intra, Inter), de la position (i, j) d'un coefficient de transformée dans un bloc et de la valeur d'amplitude de coefficients de transformée à une valeur de paramètre de quantification candidate correspondante, un deuxième type pour le mappage du mode de codage (Intra, Inter), de la position (i, j) d'un coefficient de transformée dans un bloc et d'un paramètre de quantification (QP) candidat à une valeur de seuil de quantification applicable pour un paramètre de quantification.

2. Appareil de codage vidéo par blocs, dans lequel pour la régulation du débit de sortie du codeur, les coefficients de transformée (DCT) dérivés d'un bloc de pixels sont quantifiés (QU) à l'aide d'un paramètre de quantification variable (QP) et sont codés, et dans lequel ledit paramètre de quantification est lié au pas de quantification et lesdits blocs de pixels peuvent être codés en mode intra (Intra) ou en mode inter (Inter), ledit appareil comprenant :

- un moyen (RHOITATBL, RHOIETBL ; $\rho$) adapté pour déterminer, pour chaque macrobloc d'une trame contenant un ou plusieurs desdits blocs de coefficients de transformée, quel pourcentage $\rho$ des coefficients quantifiés a une amplitude de « zéro » selon une valeur appliquée (QP) dudit paramètre de quantification ;
- un moyen de régulation (ECFR, LUQP, RDO, GBRITE, UPDT) adapté pour réguler, selon les informations obtenues concernant la relation valeur $\rho$/paramètre de quantification pour les macroblocs de ladite trame, le débit de sortie $R$ du codeur pour ladite trame, lors du traitement desdits macroblocs, à l'aide de ladite valeur de paramètre de quantification (QP) de sorte que la régulation du débit $R$ soit basée sur $R(\rho) = \theta^*(100-\rho)$, $\theta$ étant une constante,
- **caractérisé en ce que** :

   lors de la régulation du débit de sortie $R$ du codeur à l'aide de ladite valeur de paramètre de quantification, ledit moyen de régulation contraint la valeur de paramètre de quantification appliquée au macrobloc courant par un écart prédéterminé par rapport à la moyenne des valeurs de paramètre de quantification pour tous les macroblocs précédents de la trame courante jusqu'au macrobloc courant, dans lequel ladite détermination du pourcentage $\rho$ (RHOITATBL, RHOIETBL) pour chaque macrobloc de coefficients de transformée d'une trame est réalisée à l'aide de deux types de tables de recherche différents, un premier type pour le mappage du mode de codage (Intra, Inter), de la position (i, j) d'un coefficient de transformée dans un bloc et de la valeur d'amplitude de coefficients de transformée à une valeur de paramètre de quantification candidate correspondante, un deuxième type pour le mappage du mode de codage (Intra, Inter), de la position (i, j) d'un coefficient de transformée dans un bloc et d'un paramètre de quantification (QP) candidat à une valeur de seuil de quantification applicable pour un paramètre de quantification.

3. Procédé selon la revendication 1, ou appareil selon la revendication 2, dans lequel ledit codeur vidéo code un signal vidéo MPEG4-AVC.

4. Procédé selon le procédé de la revendication 1 ou 3, ou appareil selon l'appareil de la revendication 2 ou 3, dans lequel la valeur de paramètre de quantification appliquée au macrobloc courant de la trame courante est contrainte de sorte que l'écart entre la moyenne des valeurs de paramètre de quantification appliquées aux macroblocs précédents de la trame courante et la moyenne des valeurs de paramètre de quantification appliquées aux macroblocs d'une trame précédente ne dépasse pas une valeur prédéterminée.

5. Procédé selon le procédé de l'une des revendications 1, 3 et 4, ou appareil selon l'appareil de l'une des revendications 2 à 4, dans lequel lors de la détermination (RHOITATBL, RHOIETBL) pour chaque macrobloc d'une trame du pourcentage p de coefficients quantifiés qui a une amplitude de « zéro » selon une valeur appliquée (QP) dudit paramètre de quantification, pour lesdits blocs, lors du traitement selon le mode de codage intra, une prédiction intra 16*16 uniquement est réalisée à l'aide des modes de prédiction DC, de prédiction horizontale et de prédiction verticale.

6. Procédé selon le procédé de la revendication 5, ou appareil selon l'appareil de la revendication 5, dans lequel en tant qu'estimation pour le macrobloc intra à reconstruire, le contenu de l'image de la trame originale est utilisé comme reconstruction.

Fig.1

Fig.2

Fig.3

A

Fig.4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Z.LI ; W.GAO ; F.PAN ; S.MA ; K.P.LIN ; G.FENG ; X.LIN ; S.RAHARD-JA ; H.LU ; Y.LU.** Adaptive Rate Control with HRD Consideration. *document JVT-H014,* May 2003
- **Z.G.LI ; F.PAN ; K.P.LIM ; X.LIN ; S.RAHARDJA.** Adaptive Rate Control for H.264. *ICIP,* 2004

- $\rho$-Domain Rate-Distortion Analysis and Rate Control for Visual Coding and Communication. PhD Dissertation. University of California, June 2001
- Rate control using linear rate-rho model for H.264. **SHIN I-H et al.** SIGNAL PROCESSING. IMAGE COMMUNICATION. ELSEVIER SCIENCE PUBLISHERS, April 2004, vol. 19, 341-352